# EUROPÄISCHE PATENTSCHRIFT

(11) **EP 0 981 580 B1**
(45) Veröffentlichungstag und Bekanntmachung des Hinweises auf die Patenterteilung: **31.07.2002**
(21) Anmeldenummer: 98925602.9
(22) Anmeldetag: 13.05.1998
(51) Int. Cl.: C08K 9/04, C09K 21/00

(54) **NANOKOMPOSIT FÜR THERMISCHE ISOLIERZWECKE**
NANO COMPOSITE FOR THERMAL INSULATION
NANOCOMPOSITE POUR ISOLATION THERMIQUE

(30) Priorität: 14.05.1997 DE 19720269
(43) Veröffentlichungstag der Anmeldung: 01.03.2000
(73) Patentinhaber: Institut Für Neue Materialien gem. GmbH, 66123 Saarbrücken (DE)
(72) Erfinder: SCHMIDT, Helmut, D-66130 Saarbrücken (DE); MENNIG, Martin, D-66287 Quierschied (DE); JONSCHKER, Gerhard, D-66583 Spiesen-Elversberg (DE)
(74) Vertreter: Barz, Peter
(86) Internationale Anmeldenummer: EP9802843
(87) Internationale Veröffentlichungsnummer: WO9851739

(56) Entgegenhaltungen:
- EP-A- 0 590 978
- EP-A- 0 650 945
- EP-A- 0 739 856
- WO-A-97/11040
- WO-A-97/16479
- DE-A- 19 515 820

## Beschreibung

Die vorliegende Erfindung betrifft einen Nanokomposit für thermische Isolierzwecke (z.B. Brandschutzzwecke), insbesondere einen vorzugsweise transparenten Nanokomposit, der sich als Füllung für Isolierglasanordnungen eignet.

Bekannte lösungsmittelhaltige anorganische Gele zeigen besonders im Kontakt mit ihrer Lösungsphase Alterungserscheinungen, die sich in Schrumpfung, verbunden mit Trübung, Blasen- oder auch Rißbildung manifestieren. Diese Alterungserscheinungen werden oft unter dem Begriff Synerese zusammengefaßt und werden in der Fachliteratur durch fortschreitende Kondensationsreaktionen und Phasentrennung erklärt.

Zum Beispiel kann eine gelierte Dispersion von SiO₂-Partikeln in Wasser durch Aufkonzentrieren von verdünnten kolloidalen Kieselsollösungen hergestellt werden. Bei der Gelierung bilden die einzelnen SiO₂-Partikel untereinander zuerst Wasserstoffbrückenbindungen aus, bevor Si-OH-Gruppen zu nicht mehr lösbaren Si-O-Si-Bindungen kondensieren. Durch diese starren Si-O-Si-Bindungen wird das Gel immer spröder und zerreißt schließlich unter der Einwirkung der Kapillarkräfte des enthaltenen Lösungsmittels und durch die Zugspannung, die durch die Schrumpfung des Gelkörpers hervorgerufen wird.

Es ist bekannt, daß man reaktive Gruppen mit Oberflächenladungen abschirmen kann, so daß diese Synerese-aktiven Gruppen voneinander getrennt sind. Ein bekanntes Beispiel ist die Stabilisierung von SiO₂ mit Basen, z.B. mit Tetramethylammoniumhydroxid. Mit dieser Oberflächenmodifizierung durch Ladungen läßt sich zwar die Synerese verhindern, dies muß jedoch mit einer mangelnden Immobilisierung erkauft werden, da keine ausreichende Wechselwirkung zwischen den Teilchen mehr vorliegt. Außerdem lassen sich hierdurch nur relativ verdünnte Lösungen herstellen, da bei einer zu starken Annäherung der Partikel die Ladungsabschirmung durchbrochen wird und es zu spontaner Gelbildung kommt, so daß die Synerese-Blockierung verlorengeht.

Für bestimmte Anwendungen, wie z.B. als transparente Füllung zwischen (Brandschutz-)Scheiben ist es notwendig, Gele einzusetzen, die auch über längere Zeit hinweg ohne die oben erwähnten Alterungserscheinungen klar bleiben. Weiterhin ist es wichtig, daß diese Gele ihre Form präzise beibehalten, wenn sie z.B. in komplexe geformte Zwischenräume von Tür- oder Wandelementen aus anderen Materialien eingefüllt werden. Von besonderer Bedeutung dabei ist es, daß auch bei relativ hohen Feststoffgehalten keine lösungsmittelbedingten Alterungserscheinungen auftreten dürfen. Dies ist schwierig, da der natürliche Alterungsprozeß über Lösungsphasen, der nach dem Ostwald-Mechanismus abläuft, in der Regel nicht unterbunden werden kann. Hohe Feststoffgehalte sind jedoch erforderlich, wenn solche Systeme als Hitzeschutz eingesetzt werden sollen. Bei Hitzeeinwirkung entsteht, wie von Wassergläsern bekannt, ein feinporiger Schaum, der isolierend wirkt. Eine ausreichende Isolierwirkung, wie sie z.B. im Brandfalle gefordert wird (siehe z.B. DIN 4102), läßt sich wiederum nur durch sehr dicke Füllungen oder Mehrscheibenaufbauten realisieren, was ein sehr hohes Gewicht des Systems bedingt und damit dessen Einsatzmöglichkeiten begrenzt.

Der vorliegenden Erfindung lag somit die Aufgabe zugrunde, Gelsysteme bereitzustellen, die einen ausreichend hohen Feststoffgehalt bei absoluter Syneresefreiheit sowie Schichtdicken (als Hitzeschutz) ermöglichen, die deutlich unter dem gegenwärtigen Stand der Technik liegen und auch Langzeittransparenz aufweisen, was besonders bei transparenten Wandungen unabdingbar ist.

Es wurde nun überraschenderweise gefunden, daß man gegenüber Alterungserscheinungen stabile, transparente, feste Gelmaterialien herstellen kann, indem man nanoskalige Partikel anorganischer Feststoffe mit bestimmten organischen Verbindungen kombiniert, die die für die Synerese verantwortlichen Gruppen voneinander abschirmen, gleichzeitig aber ihrerseits die ausreichend starken Bindungskräfte aufbauen, die für die Ausbildung eines mechanisch stabilen Gelkörpers notwendig sind.

Durch die Verwendung von Partikeln im nm-Bereich ist die Lichtstreuung so klein, daß ausreichend Transparenz gewährleistet werden kann. Außerdem wird die Matrixstruktur an der Grenzfläche zum Partikel verändert und spielt, bedingt durch ihren hohen Anteil, für die Gesamteigenschaften des Systems eine entscheidende Rolle.

Somit kann man unter Anwendung des oben beschriebenen Prinzips Syneresestabile, feste und farblose Nanokomposit-Gele herstellen, wenn man anorganische (vorzugsweise oxidische) Partikel in Anwesenheit geeigneter Substanzen dispergiert, die zum einen Synerese-aktive Gruppen der kolloidalen Partikel schützen und zum anderen dennoch eine gewisse Vernetzung der Partikel bewirken.

Gegenstand der vorliegenden Erfindung ist somit ein Nanokomposit für thermische Isolierzwecke, der erhältlich ist durch Vereinigen von
(A) mindestens 35 Masse-% nanoskaliger, gegebenenfalls oberflächenmodifizierter Teilchen aus anorganischer Verbindung;
(B) 10-60 Masse-% Verbindung mit mindestens zwei fünktionellen Gruppen, die mit Oberflächengruppen der nanoskaligen Teilchen (A) reagieren und/oder wechselwirken können;
(C) 1-40 Masse-% Wasser und/oder organischem Lösungsmittel, das keine oder nur eine der unter (B) definierten fünktionellen Gruppen aufweist;
   wobei sich die obigen Prozentangaben auf die Summe der Komponenten (A), (B) und (C) beziehen;
   sowie
(D) 0-10 Masse-%, bezogen auf den Nanokomposit, an Zusatzstoffen.

Vorzugsweise handelt es sich bei dem soeben definierten Nanokomposit um ein transparentes Material, das im fertigen Zustand als starres (erstarrtes) festes Gel vorliegt.

Im folgenden werden die den erfindungsgemäßen Nanokomposit aufbauenden Materialien näher beschrieben.

Bei der Komponente (A) handelt es sich um nanoskalige Teilchen aus anorganischer Verbindung. Unter "nanoskaligen Teilchen" werden in der vorliegenden Beschreibung und den Ansprüchen Teilchen mit einer (durchschnittlichen) Teilchengröße von bis zu 200 nm, vorzugsweise bis zu 100 nm und insbesondere bis zu 50 nm verstanden. Eine besonders bevorzugte Teilchengröße liegt im Bereich von 1-20 nm. Diese Teilchen werden zur Herstellung des Nanokomposits in einer Menge von mindestens 35, vorzugsweise mindestens 40 und insbesondere mindestens 45 Masse-%, bezogen auf die Komponenten (A), (B) und (C), eingesetzt.

Im allgemeinen handelt es sich bei diesen Teilchen um Teilchen aus oxidischen anorganischen Verbindungen, insbesondere von Oxiden der Elemente Aluminium, Silicium, Phosphor, Bor, Zinn, Zink, Titan, Zirkonium, Wolfram und der Alkaliund Erdalkalimetalle sowie der Mischoxide aus beliebigen der soeben genannten Oxide, wobei (Misch-)Oxide von Si, Al, Ti und/oder Zr bevorzugt werden und SiO₂ und Mischoxide desselben besonders bevorzugt werden. Es können jedoch auch von Oxiden verschiedene anorganische Verbindungen erfindungsgemäß eingesetzt werden, wie z.B. Carbide, Nitride, Silicide, Boride und dergleichen.

Diese Teilchen können entweder im fertigen Zustand eingesetzt oder aber auch durch geeignete (und dem Fachmann bekannte) Verfahren erst in situ gebildet werden.

Weiterhin können diese Teilchen gegebenenfalls oberflächenmodifiziert sein. Die Oberflächenmodifizierung von nanoskaligen (insbesondere oxidischen) Teilchen ist im Stand der Technik bekannt und z.B. in der DE-A-42 12 633 beschrieben.

Die Komponente (B) des erfindungsgemäßen Nanokomposits dient, wie oben beschrieben, dazu, die nanoskaligen Teilchen der Komponente (A) zum einen so voneinander abzuschirmen, daß durch interpartikuläre Reaktionen bedingte Alterungserscheinungen im Nanokomposit vermieden werden können, und zum anderen die Teilchen dennoch so stark miteinander verbunden (vernetzt) werden, daß ein fester, mechanisch stabiler Gelkörper bereitgestellt wird.

Die Komponente (B) macht 10 bis 60 Masse-%, bezogen auf die Komponenten (A), (B) und (C) des erfindungsgemäßen Nanokomposits, aus. Vorzugsweise wird die Komponente (B) in einer Menge von 15 bis 45 und insbesondere 20 bis 35 Masse-% eingesetzt, wobei 20 bis 30 Masse-% Komponente (B) besonders bevorzugt sind.

Bei der Komponente (B) handelt es sich um eine oder mehrere, vorzugsweise eine, Verbindung (vorzugsweise organischer oder anorganisch/organischer Natur) mit mindestens zwei, vorzugsweise mindestens drei (und meist weniger als 50), funktionellen Gruppen, die mit an der Oberfläche der nanoskaligen Teilchen (A) vorhandenen Oberflächengruppen reagieren und/oder wechselwirken können. Bei den Oberflächengruppen der nanoskaligen Teilchen (A) handelt es sich entweder um solche, die aufgrund des die Teilchen aufbauenden anorganischen Materials vorhanden sind (z.B. Hydroxylgruppen) oder um solche, die durch eine Oberflächenmodifizierung dieser anorganischer Teilchen auf der Teilchenoberfläche im Nachhinein vorgesehen wurden.

Bei der Reaktion der funktionellen Gruppen der Verbindungen der Komponente (B) mit den Oberflächengruppen der nanoskaligen Teilchen (A) kann es sich um eine herkömmliche Reaktion unter Ausbildung von kovalenten oder ionischen Bindungen bzw. Komplexbindungen handeln. Lediglich beispielhaft sei hier die Kondensationsreaktion von Hydroxylgruppen unter Wasserabspaltung oder die Reaktion zwischen Hydroxylgruppe und Carboxylgruppe erwähnt. Unter "Wechselwirkung" wird im vorliegenden Zusammenhang jede Wechselwirkung zwischen den funktionellen Gruppen der Verbindungen (B) mit den Oberflächengruppen der nanoskaligen Teilchen (A) verstanden, die dazu führt, daß sich die funktionellen Gruppen der Verbindungen (B) und die Oberflächengruppen der nanoskaligen Teilchen (A) bevorzugt in permanenter unmittelbarer Nachbarschaft zueinander befinden, ohne daß eine der oben erwähnten (kovalenten, ionischen oder koordinativen) Bindungen zu beobachten ist. In diesem Zusammenhang seien Wasserstoffbrückenbindungen und van der Waals- oder Donor-Akzeptor-Wechselwirkungen als Beispiele genannt.

Vorzugsweise handelt es sich bei den funktionellen Gruppen der Verbindungen (B) um solche, die aus -OH (einschließlich -Si-OH), -SH, -NH₂, -NHR, -NR₂ (einschließlich -CONH₂, -CONHR, -CONR₂), -NR₃⁺X⁻, -COOH, -COOR, -COR, -SiOR und -CSR ausgewählt sind. Selbstverständlich kann eine Verbindung (B) zwei (oder mehr) identische funktionelle Gruppen oder voneinander verschiedene funktionelle Gruppen aufweisen. Weiterhin kann es sich bei einer oder den funktionellen Gruppe(n) z.B. auch um eine (aktivierte) C-C-Doppelbindung handeln (z.B. einer (Meth)acryl-Verbindung).

In den soeben angegebenen Formeln steht R für eine gegebenenfalls substituierte Kohlenwasserstoffgruppe, z.B. eine Alkyl-, Aryl-, Alkenyl-, Alkaryl- und Aralkyl-Gruppe, mit vorzugsweise bis zu 20, insbesondere bis zu 10, Kohlenstoffatomen, wie z.B. Methyl, Ethyl, Propyl, Butyl, Vinyl, Allyl, Phenyl, Benzyl, Tolyl und Naphthyl. Sind in einer Gruppe zwei oder mehr Reste R vorhanden, können diese gleich oder verschieden sein. Vorzugsweise steht R für eine C₁₋₄-Alkylgruppe. X⁻ steht für ein anorganisches oder organisches Anion wie beispielsweise Halogenid (insbesondere Chlorid, Bromid und Iodid), Sulfat, Nitrat, Phosphat, Hydroxid, Formiat, Acetat, Propionat und Oxalat.

Bevorzugte Verbindungsklassen für die Komponente (B) sind Polyole, Alkanolamine, Polyamine, Polytetraalkylammoniumsalze und Mischungen davon. Polyole mit 3 oder mehr Hydroxylgruppen werden besonders bevorzugt.

Konkrete Beispiele für Verbindungen (B), die erfindungsgemäß eingesetzt werden können, sind Glycerin, Ethylenglykol, Polyethylenglykol, Trimethylolpropan, Pentaerythrit, Sorbit, Polyvinylalkohol, Monoethanolamin, Diethanolamin, Triethanolamin, Ethylendiamin, Diethylentriamin, Polytetraalkylammoniumhalogenide (insbesondere Polytetramethylammoniumchlorid und -bromid), (Meth)acrylsäure, (Meth)acrylamid und Mischungen dieser Verbindungen. Unter diesen Verbindungen sind Glycerin, Sorbit und Pentaerythrit bevorzugt. Glycerin ist besonders bevorzugt.

Selbstverständlich sollte es sich bei der Komponente (B) um eine Verbindung handeln, die entweder bei Raumtemperatur flüssig ist oder zumindest in Komponente (C) ausreichend löslich ist.

Die erfindungsgemäß eingesetzte Komponente (C) wird in einer Menge von 1-40 Masse-%, vorzugsweise 10-35 Masse-% und insbesondere 15-30 Masse-% eingesetzt. Ein besonders bevorzugter Bereich für die Komponente (C) ist 20-25 Masse-%.

Die Komponente (C) kann aus Wasser, einem oder mehreren organischen Lösungsmitteln oder aus Wasser und einem oder mehreren mit Wasser mischbaren organischen Lösungsmitteln bestehen. Vorzugsweise besteht sie zu mindestens 50 Masse-% und insbesondere zu mindestens 90 Masse-% aus Wasser, wobei die alleinige Verwendung von Wasser als Komponente (C) besonders bevorzugt wird. Wird ein organisches Lösungsmittel als Komponente (C) oder als Bestandteil davon eingesetzt, weist es maximal eine der für die Komponente (B) definierten funktionellen Gruppen auf.

Als für die Komponente (C) geeignete Lösungsmittel wären beispielsweise zu nennen Monoalkohole (z.B. mit 1 bis 4 Kohlenstoffatomen wie beispielsweise Methanol, Ethanol und Propanol), Monocarbonsäuren (mit vorzugsweise 1 bis 4 Kohlenstoffatomen wie beispielsweise Ameisensäure, Essigsäure und Propionsäure), Carbonsäureanhydride (wie beispielsweise Essigsäureanhydrid), Ester (vorzugsweise mit insgesamt 2 bis 6 Kohlenstoffatomen wie beispielsweise Essigsäureethylester), Ether (vorzugsweise mit 2 bis 6 Kohlenstoffatomen wie beispielsweise Dimethylether und Diethylether), Monoamine (primär, sekundär und tertiär mit vorzugsweise bis zu 6 Kohlenstoffatomen, z.B. Diethylamin und Triethylamin), Monomercaptane (wie beispielsweise Ethanthiol und Propanthiol). Selbstverständlich können auch Mischungen aus Verbindungen, die demselben Verbindungstyp angehören (z.B. zwei Alkohole), oder unterschiedlichen Verbindungstypen angehören, eingesetzt werden. Besonders bevorzugte organische Lösungsmittel zur Verwendung als bzw. in Komponente (C) sind Alkanole wie beispielsweise Methanol und Ethanol.

Die Komponente (D), die fakultativ zur Herstellung des erfindungsgemäßen Nanokomposits verwendet wird, wird in einer Menge von maximal 10 Masse-%, vorzugsweise maximal 5 Masse-% und insbesondere maximal 3 Masse-%, bezogen auf den gesamten Nanokomposit, eingesetzt. Vorzugsweise wird die Komponente (D) nicht verwendet. Wenn die Komponente (D) Verwendung findet, bestehen die Zusatzstoffe aus den für derartige Zwecke üblichen Zusatzstoffen wie beispielsweise üblichen Stabilisatoren für die Komponente (A), Harnstoff, Metallkolloiden, Farbstoffen (z.B. Phthalocyanin-Farbstoffen, photochromen oder thermochromen Farbstoffen, usw.).

Die Herstellung des erfindungsgemäßen Nanokomposits kann z.B. einfach in der Weise erfolgen, daß man die Komponenten (A), (B) und (C) (sowie gegebenenfalls (D)) in beliebiger Reihenfolge (und vorzugsweise bei Umgebungstemperatur) miteinander vereinigt und mischt.

Soll der Nanokomposit z.B. als Füllung für Isolierglasscheiben verwendet werden, wird er vorzugsweise möglichst bald nach der Vereinigung der Komponenten (A) bis (D) in den dafür vorgesehenen Hohlraum eingefüllt und dann darin aushärten (zu einem Gel erstarren) gelassen. Der Aushärtungsvorgang kann bei Raumtemperatur erfolgen, wird jedoch bei erhöhter Temperatur (z.B. bis zu 80°C) stark beschleunigt.

Experimentell wurde gefunden, daß der erfindungsgemäße Nanokomposit einen mechanisch stabilen, transparenten und harten Gelkörper bereitstellen kann, der selbst nach mehr als 60 Tagen Schnellalterungstest bei 80°C (Abschätzung für 10 Jahre Garantiezeit) keine der bekannten Synerese-Erscheinungen wie Blasen, Trübung, Schrumpfung oder Phasentrennung zeigt und beim Erhitzen ein dichtes, feinporiges Gefüge ergibt, das einen ausgezeichneten Hitzeschutz gewährleistet. So kann beispielsweise in einer herkömmlichen Isolierglasanordnung mit 5 mm dicken, thermisch vorgespannten Scheiben bei einer Gelfüllung von nur 8 mm Dicke eine Brandschutzwirkung entsprechend der Klassifizierung F-30 erreicht werden, was durch Gele des Standes der Technik nur mit Mehrscheibenanordnungen bzw. Gelfüllungen von 12 bis 15 mm Dicke erreicht werden kann.

Weiter zeigt zumindest ein Teil der erfindungsgemäßen Nanokomposite ein thermotropes Verhalten (bedingt durch reversible Agglomeration der nanoskaligen Teilchen (A) zu lichtstreuenden größeren Teilchen bei Erwärmung, die zu einer Weißfärbung der Nanokomposite führt). Dies bedeutet einen zusätzlichen Beitrag zum Brandschutz, da der Durchtritt von Strahlungswärme durch den Nanokomposit hierdurch ver- bzw. behindert wird.

Der erfindungsgemäße Nanokomposit kann auf vielen Gebieten eingesetzt werden, z.B. als Füllung von Hohlräumen zwischen Bauteilen, z.B. aus Glas (insbesondere transparenten Isolierglasanordnungen) oder Kunststoff, Metall, Holz, Gipskarton, Fermacel, Preßspan, Keramik, Natur- oder Kunststein sowie in Elektrokabeln zu Brandschutzzwecken. Er kann auch als Beschichtungsmasse für Bauteile eingesetzt werden und eignet sich zur Herstellung thermisch und mechanisch stabiler Schäume in Form von z.B. Schüttgut oder Formteilen.

Der vorliegende Nanokomposit kann auch im Gemisch mit Pigmenten oder (organischen oder anorganischen, z.B. faser-, pulver- oder plättchenförmigen) gröberen, nicht-nanoskaligen Zuschlagstoffen wie beispielsweise Glimmerpigmenten, Eisenoxiden, Holzmehl, Glasfasern, Metallfasern, Kohlefasern, Sanden, Tonen und Bentonit verwendet werden, wenn auf die Transparenz des dadurch herstellbaren Materials kein Wert gelegt wird.

Die folgenden Beispiele veranschaulichen die vorliegende Erfindung.

### BEISPIEL 1

10 kg nanoskaliges SiO₂ (Aerosil OX 50 der Firma Degussa), 8,5 kg Glycerin und 7,9 kg Wasser werden mit einer Dissolverscheibe zu einem milchig weißen Sol homogenisiert. Der resultierenden Mischung werden 4,15 kg KOH (Restwassergehalt 15 Masse-%) unter intensivem Rühren zugegeben. Anschließend wird evakuiert, bis die Mischung siedet, und nach 10 Minuten wird die Mischung in eine Isolierglasanordnung mit einem Scheibenabstand von 9 mm eingefüllt. Nach wenigen Stunden erstarrt die Mischung zu einem transluzenten Gel, welches nach einer thermischen Behandlung bei 80°C für 4 bis 8 Stunden wasserklar und transparent wird. Die endgültige Zusammensetzung ist wie folgt: 28,8 Masse-% Wasser, 28,8 Masse-% Glycerin und 42,4 Masse-% Kaliumsilikat.

Mit dieser Mischung wurde ein Brandversuch mit Holzplatten durchgeführt. Selbst durch Beflammung mit einem 1300°C heißen Brenner konnte der Schaum nicht in kurzer Zeit geschmolzen werden, sondern isolierte gegen diese hohe Temperatur.

Wird die Masse in eine Isolierglasanordnung mit 5 mm dicken, vorgespannten Scheiben und 8 mm Scheiben-Zwischenraum gefüllt, so wird bei einem Brandtest nach DIN 4102 die Klassifizierung F-30 erreicht. Handelsübliche Gele benötigen dafür 12-15 mm gelgefüllten Scheibenzwischenraum und sind entsprechend schwerer und unhandlicher.

### BEISPIEL 2

10 kg nanoskaliges SiO₂ (Aerosil OX 50) werden in ein Gemisch aus 8,0 kg Glycerin, 0,5 kg Pentaerythrit und 5 kg Wasser eingerührt und mit einer Dissolverscheibe zu einem milchig weißen Sol homogenisiert. Man erhält eine Dispersion von polyolmodifizierten SiO₂-Nanopartikeln. Parallel dazu werden 4,15 kg Kaliumhydroxidplätzchen (Restwassergehalt 15 Masse-%) in 2,9 kg Wasser gelöst. Zur Ausbildung des gelartigen Nanokomposits wird die SiO₂-Dispersion mit der KOH-Lösung unter Kühlen intensiv vermischt, entgast und in eine Isolierglasordnung eingefüllt. Innerhalb von einigen Stunden härtet die Masse von selbst zu einem transluzenten Gel aus. Der Gelierungsvorgang kann durch Wärme stark beschleunigt werden und führt nach ca. 4-8 Stunden zu klaren Gelen, die bedingt durch die im Vergleich zu Beispiel 1 höhere Zahl von OH-Gruppen in der Verbindung B (4 gegenüber 3) und die daraus resultierende stärkere Partikelvernetzung härter als die in Beispiel 1 erhaltenen sind.

### BEISPIEL 3

Beispiel 2 wurde wiederholt, jedoch wurden anstelle von 0,5 kg Pentaerythrit 0,5 kg Sorbit eingesetzt. Es wurden im wesentlichen dieselben Ergebnisse wie in den Beispielen 1 und 2 erhalten (mit Ausnahme einer noch größeren Härte der Gele als in Beispiel 2).

## Patentansprüche

1. Nanokomposit für thermische Isolierzwecke, erhältlich durch Vereinigen von
(A) mindestens 35 Masse-% nanoskaliger Teilchen aus anorganischer Verbindung;
(B) 10-60 Masse-% Verbindung mit mindestens zwei funktionellen Gruppen, die mit Oberflächengruppen der nanoskaligen Teilchen (A) reagieren und/oder wechselwirken können;
(C) 1-40 Masse-% Wasser und/oder organisches Lösungsmittel, das keine oder nur eine der unter (B) definierten funktionellen Gruppen aufweist;
wobei sich die obigen Prozentangaben auf die Summe der Komponenten (A), (B) und (C) beziehen; sowie
(D) 0-10 Masse-%, bezogen auf den Nanokomposit, an Zusatzstoffen.

2. Nanokomposit nach Anspruch 1, **gekennzeichnet durch** mindestens 40 Masse-% Komponente (A).

3. Nanokomposit nach Anspruch 1 oder 2, **gekennzeichnet durch** 15-45 Masse-% Komponente (B).

4. Nanokomposit nach irgendeinem der Ansprüche 1-3, **gekennzeichnet durch** 10-35 Masse-% Komponente (C).

5. Nanokomposit nach irgendeinem der Ansprüche 1-4, **gekennzeichnet durch** 0-5 Masse-% Komponente (D).

6. Nanokomposit nach irgendeinem der Ansprüche 1-5, **dadurch gekennzeichnet, daß** Komponente (A) nanoskalige Teilchen von Oxiden der Elemente Al, Si, P, B, Sn, Zn, Ti, Zr, W und/oder der Alkali- und Erdalkalimetalle und von entsprechenden Mischoxiden umfaßt.

7. Nanokomposit nach irgendeinem der Ansprüche 1-6, **dadurch gekennzeichnet, daß** Komponente (B) eine oder mehrere Verbindungen einschließt, die über mindestens 2 funktionelle Gruppen verfügen, die aus -OH, -SH, -NH₂, -NHR, -NR₂, -NR₃⁺X⁻, -COOH, -COOR, -COR, -SiOR, -CSR und beliebigen Kombinationen davon ausgewählt sind, wobei die Reste R identische oder verschiedene, gegebenenfalls substituierte Kohlenwasserstoffgruppen darstellen und X⁻ für ein anorganisches oder organisches Anion steht.

8. Nanokomposit nach irgendeinem der Ansprüche 1 bis 7, **dadurch gekennzeichnet, daß** Komponente (B) aus Polyolen, Alkanolaminen, Polyaminen, Polytetraalkylammoniumsalzen und Mischungen davon ausgewählt ist.

9. Nanokomposit nach irgendeinem der Ansprüche 1 bis 8, **dadurch gekennzeichnet, daß** Komponente (B) aus Glycerin, Ethylenglykol, Polyethylenglykol, Trimethylolpropan, Pentaerythrit, Sorbit, Polyvinylalkohol, Monoethanolamin, Diethanolamin, Triethanolamin, Ethylendiamin, Diethylentriamin, Polytetraalkylammoniumhalogeniden, (Meth)acrylsäure, (Meth)acrylamid und Mischungen davon ausgewählt ist.

10. Nanokomposit nach irgendeinem der Ansprüche 1 bis 9, **dadurch gekennzeichnet, daß** Komponente (C) zu mindestens 50 Masse-% aus Wasser besteht.

11. Nanokomposit nach irgendeinem der Ansprüche 1 bis 10, **dadurch gekennzeichnet, daß** das organische Lösungsmittel für Komponente (C) aus Monoalkoholen, Monocarbonsäuren, Carbonsäureanhydriden, Estem, Ethern, Monoaminen, Monomercaptanen und beliebigen Mischungen davon ausgewählt ist.

12. Nanokomposit nach irgendeinem der Ansprüche 1 bis 11 in Form eines erstarrten Gels.

13. Verwendung des Nanokomposits nach irgendeinem der Ansprüche 1 bis 12 für Brandschutzzwecke.

14. Verwendung nach Anspruch 13 zur Herstellung von transparenten Isolierglasanordnungen.

## Claims

1. Nanocomposite for thermal insulation, obtainable by combining
(A) at least 35% by wt. of nanoscale particles of inorganic compound;
(B) 10-60% by wt. of compound having at least two functional groups capable of reacting and/or interacting with the surface groups of said nanoscale particles (A);
(C) 1-40% by wt. of water and/or organic solvent which has no or only one functional group as defined under (B);
the above percentages being based on the sum of said components (A), (B) and (C);
as well as
(D) 0-10% by wt., based on the nanocomposite, of additives.

2. Nanocomposite according to Claim 1, **characterized by** at least 40% by wt. of component (A).

3. Nanocomposite according to Claim 1 or 2, **characterized by** 15-45% of component (B).

4. Nanocomposite according to any one of Claims 1-3, **characterized by** 10-35% of component (C).

5. Nanocomposite according to any one of Claims 1-4, **characterized by** 0-5% of component (D).

6. Nanocomposite according to any one of Claims 1-5, **characterized in that** component (A) comprises nanoscale particles of oxides of the elements Al, Si, P, B, Sn, Zn, Ti, Zr, W and/or the alkali and alkaline earth metals and of the corresponding mixed oxides.

7. Nanocomposite according to any one of Claims 1-6, **characterized in that** component (B) includes one or more compounds having at least 2 functional groups selected from -OH, -SH, -NH₂, -NHR, -NR₂, -NR₃⁺X⁻, -COOH, -COOR, -COR, -SiOR, -CSR and any combinations thereof, the radicals R being identical or different, optionally substituted hydrocarbyl groups and X⁻ representing an inorganic or organic anion.

8. Nanocomposite according to any one of Claims 1 to 7, **characterized in that** component (B) is selected from polyols, alkanolamines, polyamines, polytetraalkylammonium salts and mixtures thereof.

9. Nanocomposite according to any one of Claims 1 to 8, **characterized in that** component (B) is selected from glycerol, ethyleneglycol, polyethyleneglycol, trimethylolpropane, pentaerythritol, sorbitol, polyvinylalcohol, monoethanolamine, diethanolamine, triethanolamine, ethylenediamine, diethylenetriamine, polytetraalkylammonium halides, (meth)acrylic acid, (meth)acrylic amide and mixtures thereof.

10. Nanocomposite according to any one of Claims 1 to 9, **characterized in that** component (C) consists of at least 50% of water.

11. Nanocomposite according to any one of Claims 1 to 10, **characterized in that** the organic solvent for component (C) is selected from monoalcohols, monocarboxylic acids, carboxylic anhydrides, esters, ethers, monoamines, monomercaptanes and any mixtures thereof.

12. Nanocomposite according to any one of Claims 1 to 11 in the form of a solidified gel.

13. Use of the nanocomposite according to any one of Claims 1 to 12 for fireproofing purposes.

14. Use according to Claim 13 for the manufacture of transparent insulation glass assemblies.

## Revendications

1. Nanocomposite pour isolation thermique, que l'on peut obtenir en mélangeant
(A) au moins 35 % en poids de nanoparticules d'un composé minéral,
(B) de 10 à 60 % en poids d'un composé portant au moins deux groupes fonctionnels capables de réagir et/ou d'interagir avec des groupes présents à la surface des nanoparticules (A),
(C) de 1 à 40 % en poids d'eau et/ou d'un solvant organique contenant un seul ou pas de groupe fonctionnel tel que défini pour (B), les pourcentages ci-dessus se rapportant à la somme des composants (A), (B) et (C), et
(D) de 0 à 10 % en poids, rapporté au nanocomposite, d'adjuvants.

2. Nanocomposite selon la revendication 1, **caractérisé par le fait que** le composant (A) représente au moins 40 % en poids.

3. Nanocomposite selon la revendication 1 ou 2, **caractérisé par le fait que** le composant (B) représente de 15 à 45 % en poids.

4. Nanocomposite selon l'une quelconque des revendications 1 à 3, **caractérisé par le fait que** le composant (C) représente de 10 à 35 % en poids.

5. Nanocomposite selon l'une quelconque des revendications 1 à 4, **caractérisé par le fait que** le composant (D) est présent à raison de 0 à 5 % en poids.

6. Nanocomposite selon l'une quelconque des revendications 1 à 5, **caractérisé par le fait que** le composant (A) englobe des nanoparticules d'oxydes des éléments Al, Si, P, B, Sn, Zn, Ti, Zr, W et/ou des métaux alcalins ou alcalino-terreux et les oxydes mixtes correspondants.

7. Nanocomposite selon l'une quelconque des revendications 1 à 6, **caractérisé par le fait que** le composant (B) englobe un ou plusieurs composés possédant au moins deux groupes fonctionnels choisis parmi les groupes -OH, -SH, -NH₂, -NHR, -NR₂, -NR₃⁺X⁻, -COOH, -COOR, -COR, -SiOR, -CSR et toute combinaison de ceux-ci, où les résidus R, identiques ou différents, représentent des groupes hydrocarbonés éventuellement substitués et X- représente un anion organique ou minéral.

8. Nanocomposite selon l'une quelconque des revendications 1 à 7, **caractérisé par le fait que** le composant (B) est choisi parmi les polyols, les alcanolamines, les polyamines, les sels de polytétraalkylammonium, ou des mélanges de tels composés.

9. Nanocomposite selon l'une quelconque des revendications 1 à 8, **caractérisé par le fait que** le composant (B) est choisi parmi le glycérol, l'éthylèneglycol, le polyéthylèneglycol, le triméthylopropane, le pentaérythritol, le sorbitol, le poly(alcool vinylique), la monoéthanolamine, la diéthanolamine, la triéthanolamine, l'éthylènediamine, la diéthylènetriamine, les halogénures de polytétraalkylammonium, l'acide (méth)acrylique, le (méth)acrylamide et des mélange de ces composés.

10. Nanocomposite selon l'une quelconque des revendications 1 à 9, **caractérisé par le fait que** le composant (C) est constitué d'au moins 50 % en poids d'eau.

11. Nanocomposite selon l'une quelconque des revendications 1 à 10, **caractérisé par le fait que** le solvant organique pour le composant (C) est choisi parmi les monoalcools, les acides monocarboxyliques, les anhydrides d'acides carboxyliques, les esters, les éthers, les monoamines, les monomercaptans et toute combinaison de ces composés.

12. Nanocomposite selon l'une quelconque des revendications 1 à 11 sous forme d'un gel figé.

13. Utilisation du nanocomposite selon l'une quelconque des revendications 1 à 12 pour la protection anti-feu.

14. Utilisation selon la revendication 13, pour la fabrication d'arrangements de verres isolants transparents.
